(19) Europäisches Patentamt
European Patent Office
Office européen des brevets

(11) **EP 3 706 990 B1**

(12) **EUROPEAN PATENT SPECIFICATION**

(45) Date of publication and mention of the grant of the patent:
**14.06.2023   Bulletin 2023/24**

(21) Application number: **18875708.2**

(22) Date of filing: **07.11.2018**

(51) International Patent Classification (IPC):
*B29D 30/08* (2006.01)    *B29D 30/00* (2006.01)
*B29D 30/06* (2006.01)    *B60C 19/00* (2006.01)

(52) Cooperative Patent Classification (CPC):
**B29D 30/0061; B29D 30/0681; B60C 19/002**

(86) International application number:
**PCT/CN2018/114282**

(87) International publication number:
**WO 2019/091388 (16.05.2019 Gazette 2019/20)**

(54) **PNEUMATIC TIRE WITH NOISE DAMPER**

PNEUMATISCHER REIFEN MIT GERÄUSCHDÄMPFER

PNEU COMPORTANT UN ATTÉNUATEUR DE BRUIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **10.11.2017   US 201715809193**

(43) Date of publication of application:
**16.09.2020   Bulletin 2020/38**

(73) Proprietor: **Triangle Tyre Co., Ltd.**
**Weihai, Shandong 264200 (CN)**

(72) Inventors:
• **MONTGOMERY, Edward L.**
**North Canton**
**Ohio 44720 (US)**
• **MAJUMDAR, Ramendra Nath**
**Hudson**
**Ohio 44236 (US)**
• **WANG, Dapeng**
**Weihai**
**Shandong 264200 (CN)**
• **ZHANG, Tao**
**Weihai**
**Shandong 264200 (CN)**

(74) Representative: **Kolster Oy Ab**
**Salmisaarenaukio 1**
**P.O. Box 204**
**00181 Helsinki (FI)**

(56) References cited:
EP-A1- 2 239 152        EP-A2- 0 911 185
CN-A- 1 669 835         CN-A- 102 019 819
CN-A- 102 285 131       CN-A- 105 899 377
JP-A- 2012 020 610      KR-A- 20100 008 446
US-A1- 2012 125 507     US-A1- 2014 246 133

**Description**

**CROSS REFERENCE TO RELATED APPLICATIONS**

This application is related to U.S. Patent Application No. 15/809,193 filed on November 10, 2017.

**TECHNICAL FIELD**

This invention relates to the field of tire.

**BACKGROUND**

The present invention is directed to a foam noise damper, for use in tires to dampen sound, where the terminal ends of the noise damper are such as to allow it to be installed without the need to bind the terminal ends of the noise damper by applying an adhesive between the two ends of the foam.
It is known in the art that all carcasses of pneumatic green tires are built as a series of layers of flexible high modulus cords encased in a low modulus rubber; the cords in each layer are oriented in a chosen path or direction and substantially equally spaced and parallel. Before curing, the tire is often shaped by blowing air inside, and at that time substantial expansion occurs. Components with lower low strain modulus expand easier than components with higher low strain modulus. The tire, whether belted radial ply or bias ply, is cured in a curing press using a curing bladder, which forces expansion of the tire.
A noise damper precursor can be placed which will form a noise damper during tire cure. In that case the noise damper precursor will expand with the carcass. Noise damper precursor can also be applied to green (uncured) tire and in that case no expansion of noise damper precursor will take place. (See, for example US 7,694,707 to Agostini and Leyssens).
When the carcass is cured with a noise damper precursor in it, as it usually is in a tubeless tire, the noise damper precursor may further expand with the carcass, which is forced against the indentations in the curing mold to form the tread, and all components are co-cured so as to provide a substantially cohesive bond between one and another. A noise damper for a pneumatic tire, when it is built in, is typically formed from a compound containing a major proportion by weight of a halo butyl rubber.
No prior art exists where noise damper is placed before tire cure on tire building drum and the noise damper expands with the expansion of the tire. However, prior art exists where noise damper is attached after green (uncured) tire expansion and then curing the tire (See for example Polymers & Tyre Asia, June/July 2012, p. 48; or Sandstrom, Majumdar, Sundkvist, Bormann, Pan, "Method for making pneumatic tire with foam noise damper"; EP 2397314 B1, May 29, 2013).
The use of foam with rectangular longitudinal cross-section is very common where the two ends are cut at an angle of 90 degrees and the ends of the foam are joined in a butt joint by an adhesive. The foam length must be very close to the inner circumference of the tire to join the ends with a separate application of adhesive with negligible margin of error, which makes its application very cumbersome.
The foam is a sponge like multi-cellular material, which may be provided with a water-impermeable outer coating to prevent water from infiltrating into the sponge like multi-cellular material. Typically, the foam has a belt-shape, a rectangular cross-section, and a flat surface. Foam with uneven surface or a patterned surface facing the cavity has also been employed. See, for example, US Patent No. 6,726,289 to Yukawa et al., which shows irregular surfaces, the teaching of which is incorporated herein by reference. Typically, the foam is adhered to noise damper using a pressure-sensitive adhesive, for example, a transfer adhesive or a double-sided adhesive tape. Usually the tire innerliner should be free of mold release composition for good bonding to the foam. Some silicone adhesives can be applied without cleaning the mold release composition. In many cases, the terminal ends of the foam are joined by an adhesive in an end-to-end butt joint by applying adhesive to the entire splice surface, or to save adhesive, by partially covering the splice surface. Other means of placing foam inside tire without joining the terminal ends of the foam include the use of a coupling member. *See, for example*, US Patent No. 7,556,075 to A. Tanno, which teaches multiple pieces of noise dampers in a Low Noise Pneumatic Tire, as well as a variety of uneven noise damper surfaces for noise reduction.
US Patent No. 7,669,628 to N. Yukawa teaches a pneumatic tire having a noise damper, where the noise damper is fixed to the inner surface, using a double-sided adhesive tape, and the noise damper has a substantially constant cross-sectional shape along the entire circumferential length. Yukawa teaches an exception for the end portions of the damper, where in the case where the ends of the damper are not connected to each other, it is preferable that the end portions are tapered to prevent friction between the ends when the ends of the damper are not connected to each other using a glue or other means. EP2239152A1 disclosed a pneumatic tire with noise reducer, which can reduce the cost for manufacturing a noise reducer and which can keep the effect to suppress cavity resonance. The pneumatic tire with noise reducer comprises a pneumatic tire and a noise reducer attached to a tire cavity surface of the tire. The noise reducer is formed into a ring shape by butting both end faces of elongated sponge material disposed along the tire circumferential direction. In the noise reducer, moreover, a butt-joint face formed by butting both of the end faces of the sponge material is a substantive plane.

## SUMMARY

The present invention is characterized by the features of the independent claims. Some embodiments of the invention are disclosed in the dependent claims.

## DESCRIPTION OF THE DRAWINGS

The foregoing and other features and advantages of the present invention will become apparent to those skilled in the art to which the present invention relates upon reading the following description with reference to the accompanying drawings, in which:

Fig. 1 is a bead-to-bead cross-sectional view of a tire showing a foam noise damper installed in a tire; and

Fig. 2 is a longitudinal cross-sectional side view of a foam noise damper in accordance with the present invention having tapered ends;

Fig. 2A is an enlarged view of Fig. 2, which further includes an adhesive layer and adhesive protective layer;

Fig. 3 is a longitudinal cross-sectional side view of a foam noise damper where one terminal end overlaps the other terminal end and they are joined by an adhesive applied to the overlapping terminal end underneath the foam; and

Figs. 4 - 6 are annular cross-sectional views through the center of the tread of alternative applications of the noise damper in accordance with the present invention.

## DETAILED DESCRIPTION

The present invention is directed to a foam noise damper for a tire in which a tire carcass having a circumferential tread, at least one ply, at least two spaced-apart beads, and sidewall portions extending between the tread and the beads, has an adhesively secured noise damper which lines an inner surface of the tire and the terminal ends are cut at an angle of less than 90 degrees, and overlap each other.

The present invention uses a belt-like foam where the two ends of foam are such that they are cut at an angle and will overlap. The length of the foam is longer than the internal circumference of the tire in which it is installed. So, when the longer side is coated with adhesive or used with an adhesive tape to adhere it to the tire, the splice will physically overlap. In doing so, the sound absorption achieved by the present invention, for example, was similar to that of foam where spliced ends were the exact length to cover the inner surface of a tire and were joined directly by a separate application of an adhesive.

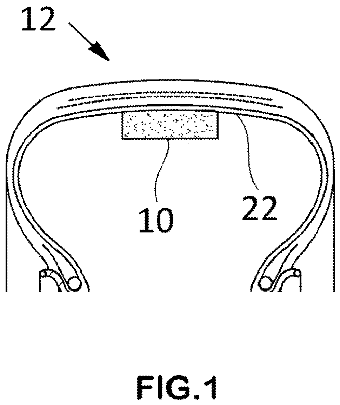

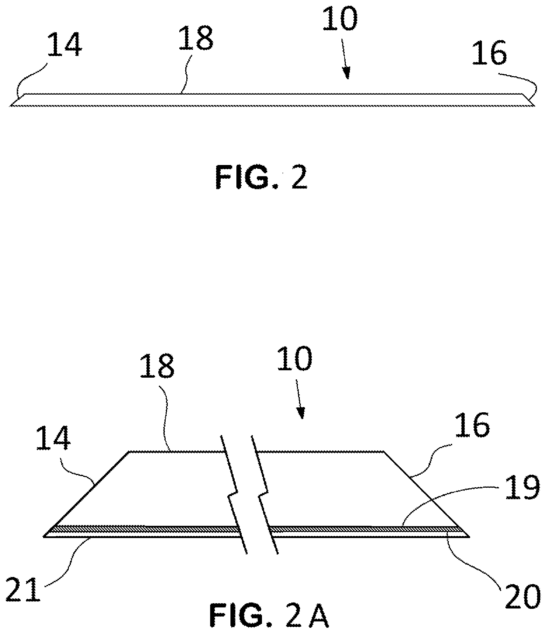

The foam 10 has a generally rectangular shape when taken in a cross-sectional view when installed in a tire 12 as shown in Fig. 1. But, the inner surface 18 of the foam can have a shaped surface that is wavy or has bumps as is known in the art. The cut ends 14, 16 of the foam 10 when taken along a longitudinal cross-sectional view, as shown in Figs. 2 and 2A, describes a trapezoidal shape, wherein the length of the inner surface 18 is shorter than the length of the outer surface 19. An adhesive 20 is present in the longer side 19 of the foam when cut/died out from a roll where one side is coated with a pressure-sensitive adhesive. Alternatively, an adhesive can be applied to adhere the foam to the inner surface or innerliner 22 of the tire. The adhesive 20 can have an optional paper cover/backing 21 that can be removed prior to applying the foam 10 to the inner surface of the tire.

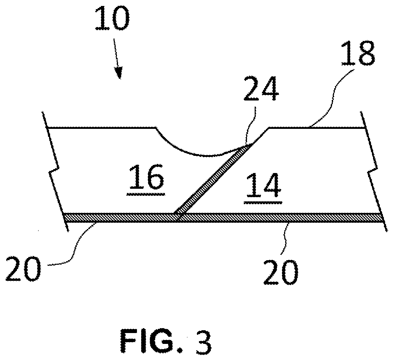

Since the length of the foam is longer than the inner circumference of the tire, the terminal ends of the foam can overlap. A first terminal end 14 of the foam 10 can be adhered to the inside of the tire with the result that the second terminal end 16 will overlap the first terminal end 14, as shown in Fig. 3. The overlapping terminal end 16 will then be adhesively bonded to terminal end 14 with the adhesive 24 already present underneath the terminal end 16. (In this case, the adhesive of 24 is the same as the adhesive of 20).

An alternative embodiment involves applying the adhesive 20 to the foam 10, placing the foam into the tire. Another embodiment involves applying the adhesive 20 to the inside of the tire, placing the foam into the tire, then applying an adhesive 24 to the splice between the terminal ends 14, 16.

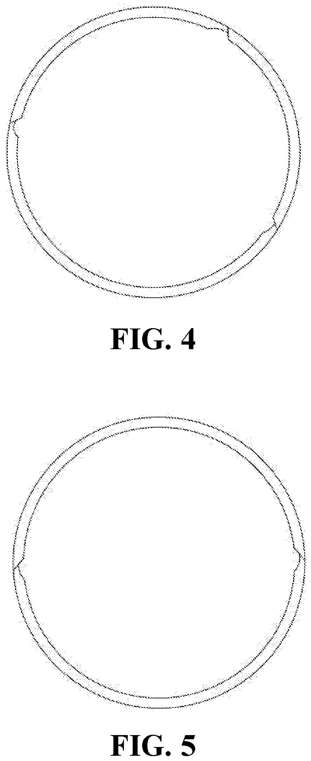

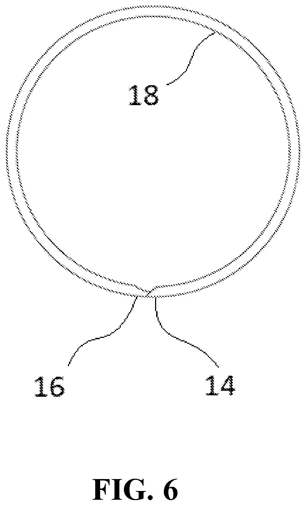

As is shown in Figs. 4-6, the foam can be installed as a single piece (Fig. 6) or as multiple pieces. Fig. 4 shows an installation as three pieces, while Fig. 5 shows two pieces.

The angle of cut of the terminal end of the foam should be less than 90° and preferably between 65° and 5°, with 45° to 10° also being preferred. The angle on each end can be the same or different. The angles of the terminal ends are cut to form the foam into a trapezoidal shape.

In some embodiments, the angles of the terminal ends are cut to form the noise damper into an acute trapezoidal shape.

In some embodiments, the noise damper is a trapezoid shaped noise damper.

In some embodiments, the trapezoid shaped noise damper has a cross sectional shape of trapezoid in a longitudinal direction.

In some embodiments, the angles of cut of the terminal ends of the foam comprise a first acute angle and a second acute angle, wherein the first acute angel and the second acute angle are adjacent.

In some embodiments, the noise damper is a foam noise damper.

In some embodiments, the foam noise damper can be applied as a one-piece foam or multiple pieces or sections of foam. Examples are shown in Figs. 4-6.

In some noise embodiments, the noise damper is disposed radially inward of the carcass.

The terminal end can be described as a right-angled triangle with angle being defined by the hypotenuse and the base. For example, for a foam having a thickness of 25 mm, at 45°, the base is 25 mm and hypotenuse is 35 mm, which would be a 100% overlap of the angled cut. At a 15° angle, the base would be 93 mm and the hypotenuse would be 96 mm. The overlap will be at least 1mm up to 100 mm, with a preferred range of 48-96 mm representing respectively about 50-100% overlap.

The lower the angle, the more the margin of error in cutting the foam is allowed. When the angle is 45 degrees, for a foam thickness of 25 mm, the margin of error allowed is 18 mm, assuming a 50-100% overlap of the angled cut. When the angle is 15 degrees, the margin of error allowed is 58 mm, assuming 50-100% overlap. These splices assume a rectangular cross section, but other shapes can also be used for foams as are known in the art. The formula used is as follows:

$$25 \text{ mm}/x = \tan 15 = 0.2679$$

Thus, x = 93.3 mm, the hypotenuse is 96 mm, and ½ of the hypotenuse would be 58 mm.

For a greater margin of error, a lower degree cut is preferred. However, if the angle is too small, such as 5°, then a part of the foam will be very thin and have increased chances of breaking/ripping. The preferred acoustic foam is polyether polyurethane. The foam receives a water-repellent treatment and has a preferred specific gravity in the range of about 0.005 - 0.06. Most commercial foam in use has specific gravity are in the range 0.02 - 0.035. The volume of damper inside cavity is 0.4% - 20%, while the thickness of foam is 30 mm.

For the present invention, it is recommended that a pressure-sensitive transfer adhesive be employed on the foam roll.

The installation of the noise damper is done in a known, conventional manner. For example, a tire can be built in such a way that the noise damper portion where the foam was attached was free of mold release. For example, U.S. Patents No. 7,332,047; 7,419,557; 8,776,851; and 9,630,457, all issued to Majumdar et al., the disclosure of which is incorporated herein by reference, teaches a thermoformable barrier film based on nylon or a film based on a blend nylon and rubber commonly referred to a dynamically vulcanized alloy (DVA).

A barrier film was employed in the '047 patent, wherein a removable "self- supporting barrier film of non-sulfur vulcanizable, expandable, thermoformable synthetic resinous material" is applied to the inner-surface of the tire, followed by mold release application, and curing to prevent release agents from contaminating the inner surface of the tire where foam will be adhered. After tire cure, the barrier film is removed and the foam is attached on the clean innerliner surface.

There are three basic ways that a tire with noise-cancelling foam can be manufactured:

Method 1: Apply a thin layer of foam precursor inside green (uncured) tire. During tire cure conditions (160°C / 200 psi) foam is formed from the precursor when the tire comes out of the mold. This eliminates extra steps of applying foam to cured tire. Some patent literature exists but the process is far from commercialization.

Method 2: Apply cured foam inside green tire and then cure the composite at high temperature and pressure. It eliminates many post-cure tire application steps and at least one piece of patent literature exists.

Method 3: Apply cured foam to cured tire. Take cured foam and adhered to cured tire. Presently, all commercial tires with foam are made this way. Best way to carry out the invention:
Select an acoustic foam 10 of appropriate thickness (for example, polyether polyurethane of density 0.03 g/cm3 and a thickness of 25 mm) with tapered ends (as in Fig. 2), the longer side 19 of which is coated with pressure sensitive adhesive 20 through a foam converter. The terminal ends are cut to provide tapered ends 14, 16. The pressure sensitive adhesive 20 is protected with a release coated paper 21 which will be removed just before application to tire. Cut the foam with adhesive to appropriate width e.g. 9 cm wide and the ends at an angle of about 20°. The length of the foam should be longer than the internal circumference of the tire where it will be applied. This may also be done by foam converter. The inside of the tire innerliner should be clean and free of mold release and the foam noise damper is attach inside the tire with gradual removal of the protective release paper overlapping the foam splice and joined by the adhesive present underneath the foam. The foam noise damper can be applied as a one-piece foam or multiple pieces or sections of foam as shown in Figs. 4-6.

Alternative Way to Carry Out the Invention:
A foam without the pressure-sensitive adhesive coat underneath can be employed. An adhesive which is not a pressure sensitive type is applied underneath the foam and then the foam is applied inside the tire with the adhesive touching the tire innerliner and the overlapped portion of the splice. The adhesive can cover the entire surface of foam or partially cover the surface in strip form to save some adhesive. The adhesive will solidify and attach the foam to the inner tire. This process can be slightly modified by applying adhesive inside the tire first and then applying the foam inside. In this case, some smearing of adhesive in the overlapped area is needed.

Most adhesives will require a tire with clean innerliner where the noise damper will be applied. However, some silicone adhesives are known which bond strongly to tire noise damper without cleaning of mold release e.g. Loctite Silicone 5900 or Loctite Silicone 5910. (*See*, US 7,368,024 to Majumdar et al. or US Pub. No. 2013/0032262 to Bormann et al.).

Besides silicone adhesive (Loctite SI 5930 FIT available from Henkel), the following adhesives worked well also: silane modified polymer (Example Teroson MS 9360 available from Henkel); 2-component urethane (e.g. 7542A/B available from LORD Corporation).

If adhesive is applied first inside tire and then foam is inserted, adhesive is needed where foam is overlapped. Fast cure adhesive is preferred in this case so that tire can be moved for storage right away. Following are good fast cure adhesives: 2-component urethane (e.g. 7542A/B available from LORD Corporation or Gorilla Glue); Cyanoacrylates (Crazy glue, Super glue, Gorilla Super Glue).

In commercial tires with foam, splice of foam is cut at an angle of 90° and joined by an adhesive. The foam must be of exact length as inner circumference of the tire with very little margin of error. If the foam is cut slightly shorter than the inner circumference of the tire, scrap foam will be generated, resulting in waste. With the present invention, there is a greater margin of error, and less scrap is produced. In the present invention, if the cut is at an angle of less than 90°, preferably at a 45°angle. Other angles are possible, such as 5 to 65 degrees, 10 to 40 degrees, or 40 to 50 degrees. 15 degrees is also a preferred angle.

In all commercial tires with foam, splices were joined using an adhesive which is an extra manufacturing step if splice is not joined as in US 7,669,628. Little gaps between the foam significantly impairs sound absorption, leading to increased cabin noise. When splice of foam is cut at an angle of 45°, less impairment of sound absorption takes place and decreased cabin noise compared to splices where the ends are cut at an angle of 90°.

Example:

Four identical sets of tires were manufactured where innerliner was kept clean as in US 7,332,047. Adhesive coated foam were inserted in the same manner with the only difference being that for a first set, the foam was cut at 90° and the terminal ends left unjoined with a little gap, the next or second set was made using a foam where the terminal ends were cut at 45° and the terminal ends were left unjoined with a little gap. The third set of tires were made using a foam where terminal ends were cut at 90° and the terminal ends were adhesively joined (as represented in the prior art), and the fourth set was made using foam where the terminal ends were cut at 45° and the terminal ends overlapped and joined by the pressure sensitive adhesive present between the top of the one terminal end of the foam and underneath the overlapped terminal end of the foam. Experimental tires were mounted on a vehicle and the noise reduction was measured at the left ear of the driver's side of the vehicle cabin in an anechoic chamber and the results were as follows:

| Noise reduction (decibels, dBa) | |
| --- | --- |
| Small gap between foam and ends cut at 90° | -0.64 |
| Small gap between terminal ends cut at 45° | -1.33 |
| Terminal ends cut at 90°angle, and splice joined by an adhesive | -2.47 |

(continued)

| Noise reduction (decibels, dBa) | |
| --- | --- |
| Terminal ends cut at 45°, overlapped, and the overlapped terminal end joined by an adhesive present on the other terminal end (Present Invention) | -2.69 |

As the table shows, the present invention yielded the best results.

**Claims**

1. A tire (12) comprising:

   a circumferential tread having an outer tread surface and an inner innerliner surface (22);
   at least two spaced-apart beads;
   sidewall portions extending between the tread and the beads; and
   an adhesively secured noise damper (10) which lines an inner surface (22) of the tire (12) and terminal ends of the noise damper (10) are cut at an angle of less than 90 degrees, and overlap each other;
   the tire (12) is **characterized in that** said noise damper is a trapezoid shaped noise damper having a cross sectional shape of trapezoid in a longitudinal direction and having a shorter inner surface (18) and a longer outer surface (19), and said longer outer surface (19) is coated with an adhesive (20) to adhere it to the tire.

2. The tire of claim 1 wherein said noise damper (10) is a belt-like noise damper having first and second terminal ends (14, 16), wherein the noise damper lines said innerliner surface; wherein the noise damper is adhesively secured to said innerliner surface, and wherein the terminal ends of said noise damper are cut at an angle of less than 90 degrees, overlap each other, and the overlapped second terminal end of the noise damper is joined to the first terminal end by the adhesive present underneath the second terminal end.

3. The tire of claim 2 wherein the terminal ends (14, 16) are cut at an angle of between about 5 degrees and about 65 degrees.

4. The tire of claim 2 wherein the terminal ends (14, 16) are cut at an angle of between about 10 degrees and 55 degrees.

5. The tire of claim 2 wherein the terminal ends (14, 16) are cut at an angle of about 40 degrees to 50 degrees.

6. The tire of claim 2 wherein the terminal ends (14, 16) are cut at an angle of about 45 degrees.

7. The tire of claim 2 wherein the terminal ends (14, 16) are cut at the same angle.

8. The tire of claim 2 wherein the terminal ends (14, 16) are cut at different angles.

9. The tire of claim 2 wherein the noise damper (10) is a foam noise damper.

10. A method for making a tire (12) having a noise damper, the method comprising the steps of:

    A. pressing a barrier layer onto an exposed virgin surface of a green tire innerliner to adhere the barrier layer to the virgin surface and thereby form a protected green innerliner;
    B. applying a mold release agent inside the tire (12);
    C. curing the tire (12) with protected innerliner;
    D. removing the barrier layer to reveal the tire innerliner virgin surface; and
    E. securing a noise damper (10) to the tire innerliner virgin surface,

    the method is **characterized in that** said noise damper (10) is a trapezoid shaped noise damper having a cross sectional shape of trapezoid in a longitudinal direction and having a shorter inner surface (18) and a longer outer surface (19), and wherein the longer outer surface (19) is coated with an adhesive (20) and attached to said innerliner virgin surface, wherein one end of the noise damper is cut at an angle of less than 90° (e.g. 5~65°or 10~55° or 40~50°) and overlaps the other end of the noise damper cut at an angle of less than 90°(e.g. 5~65°or 10~55° or 40~50°).

11. A method for making a pneumatic tire having a noise damper (10), **characterized in that** comprising the steps of:

A. providing a pneumatic tire comprising two spaced inextensible beads; a ground contacting tread portion; a pair of individual sidewalls extending radially inward from the axial outer edges of said tread portion to join the respective beads, the axial outer edges of the tread portion defining a tread width, a supporting carcass for tread portion and sidewalls, an innermost innerliner surface (22);

B. installing a noise damper (10) disposed radially inward of the carcass, wherein said noise damper (10) is a trapezoid shaped noise damper having a cross sectional shape of trapezoid in a longitudinal direction and having a shorter inner surface (18) and a longer outer surface (19), and with the shorter inner surface (18) facing an interior cavity of the tire (12), wherein one end of the noise damper is cut at an angle of less than 90° (e.g. 5~65° or 10~55° or 40~50°) and overlaps the other end of the noise damper cut at an angle of less than 90° (e.g. 5~65° or 10~55° or 40~50°);

C. applying an adhesive (20) to the longer outer surface (19) to form an adhesive coated surface;

D. attaching the adhesive coated noise damper to the innerliner surface (22); and

E. curing the adhesive (20).

12. The method of any one of claims 10-11, wherein the noise damper (10) is a foam noise damper.

**Patentansprüche**

1. Reifen (12), der Folgendes umfasst:

eine umfängliche Lauffläche mit einer äußeren Lauffflächenfläche und einer inneren Innerlinerfläche (22);

mindestens zwei beabstandete Wülste;

Seitenwandabschnitte, die sich zwischen der Lauffläche und den Wülsten erstrecken; und

einen mit Klebmittel gesicherten Geräuschdämpfer (10), der eine Innenfläche (22) des Reifens (12) unterfüttert, wobei Abschlussenden des Geräuschdämpfers (10) in einem Winkel von weniger als 90 Grad geschnitten sind und einander überlappen;

der Reifen (12) ist **dadurch gekennzeichnet, dass** der Geräuschdämpfer ein trapezförmiger Geräuschdämpfer ist, der in einer Längsrichtung eine Querschnittsform eines Trapezes aufweist sowie eine kürzere Innenfläche (18) und eine längere Außenfläche (19) aufweist und die längere Außenfläche (19) zum Kleben an den Reifen mit einem Klebmittel (20) beschichtet ist.

2. Reifen nach Anspruch 1, wobei der Geräuschdämpfer (10) ein gurtartiger Geräuschdämpfer mit einem ersten und einem zweiten Abschlussende (14, 16) ist, wobei der Geräuschdämpfer die Innerlinerfläche unterfüttert, wobei der Geräuschdämpfer mit Klebmittel an der Innerlinerfläche gesichert ist, und wobei die Abschlussenden des Geräuschdämpfers in einem Winkel von weniger als 90 Grad geschnitten sind, einander überlappen und das überlappte zweite Abschlussende des Geräuschdämpfers durch das unter dem zweiten Abschlussende vorhandene Klebmittel mit dem ersten Abschlussende verbunden ist.

3. Reifen nach Anspruch 2, wobei die Abschlussenden (14, 16) in einem Winkel zwischen ungefähr 5 Grad und ungefähr 65 Grad geschnitten sind.

4. Reifen nach Anspruch 2, wobei die Abschlussenden (14, 16) in einem Winkel zwischen ungefähr 10 Grad und 55 Grad geschnitten sind.

5. Reifen nach Anspruch 2, wobei die Abschlussenden (14, 16) in einem Winkel von ungefähr 40 Grad bis 50 Grad geschnitten sind.

6. Reifen nach Anspruch 2, wobei die Abschlussenden (14, 16) in einem Winkel von ungefähr 45 Grad geschnitten sind.

7. Reifen nach Anspruch 2, wobei die Abschlussenden (14, 16) im selben Winkel geschnitten sind.

8. Reifen nach Anspruch 2, wobei die Abschlussenden (14, 16) in verschiedenen Winkeln geschnitten sind.

9. Reifen nach Anspruch 2, wobei der Geräuschdämpfer (10) ein Schaumstoffgeräuschdämpfer ist.

10. Verfahren zum Herstellen eines Reifens (12) mit einem Geräuschdämpfer, wobei das Verfahren die folgenden Schritte umfasst:

A. Pressen einer Sperrschicht auf eine freiliegende unbehandelte Fläche eines Reifenrohlinginnerliners, um die Sperrschicht auf die unbehandelte Fläche zu kleben und dadurch einen geschützten Rohlinginnerliner zu bilden;
B. Auftragen eines Fomtrennmittels im Reifen (12);
C. Aushärten des Reifens (12) mit geschütztem Innerliner;
D. Entfernen der Sperrschicht, um die unbehandelte Fläche des Reifeninnerliners freizulegen; und
E. Sichern eines Geräuschdämpfers (10) auf der unbehandelten Fläche des Reifeninnerliners,

das Verfahren ist **dadurch gekennzeichnet, dass** der Geräuschdämpfer (10) ein trapezförmiger Geräuschdämpfer ist, der in einer Längsrichtung eine Querschnittsform eines Trapezes aufweist sowie eine kürzere Innenfläche (18) und eine längere Außenfläche (19) aufweist, und wobei die längere Außenfläche (19) mit einem Klebmittel (20) beschichtet und an der unbehandelten Fläche des Innerliners befestigt ist, wobei ein Ende des Geräuschdämpfers in einem Winkel von weniger als 90° (z. B. 5~65° oder 10~55° oder 40~50°) geschnitten ist und das andere Ende des Geräuschdämpfers, das in einem Winkel von weniger als 90° (z. B. 5~65° oder 10~55° oder 40~50°) geschnitten ist, überlappt.

11. Verfahren zum Herstellen eines Luftreifens mit einem Geräuschdämpfer (10), **dadurch gekennzeichnet, dass** es die folgenden Schritte umfasst:

A. Bereitstellen eines Luftreifens, der zwei beabstandete nicht dehnbare Wülste; einen Bodenkontaktlaufflächenabschnitt; ein Paar individueller Seitenwände, die sich von den axialen Außenkanten des Laufflächenabschnitts radial nach innen erstrecken, um sich mit den jeweiligen Wülsten zu verbinden, umfasst, wobei die axialen Außenkanten des Laufflächenabschnitts eine Laufflächenbreite, eine stützende Karkasse für einen Laufflächenabschnitt und Seitenwände, eine innerste Innerlinerfläche (22) definieren;
B. Installieren eines Geräuschdämpfers (10), der von der Karkasse radial nach innen angeordnet ist, wobei der Geräuschdämpfer (10) ein trapezförmiger Geräuschdämpfer ist, der in einer Längsrichtung eine Querschnittsform eines Trapezes aufweist sowie eine kürzere Innenfläche (18) und eine längere Außenfläche (19) aufweist, wobei die kürzere Innenfläche (18) einem inneren Hohlraum des Reifens (12) zugewandt ist, wobei ein Ende des Geräuschdämpfers in einem Winkel von weniger als 90° (z. B. 5~65° oder 10~55° oder 40~50°) geschnitten ist und das andere Ende des Geräuschdämpfers, das in einem Winkel von weniger als 90° (z. B. 5~65° oder 10~55° oder 40~50°) geschnitten ist, überlappt;
C. Auftragen eines Klebmittels (20) auf die längere Außenfläche (19), um eine mit einem Klebmittel beschichtete Fläche zu bilden;
D. Befestigen des mit einem Klebmittel beschichteten Geräuschdämpfers an der Innerlinerfläche (22); und
E. Aushärten des Klebmittels (20).

12. Verfahren nach einem der Ansprüche 10 bis 11, wobei der Geräuschdämpfer (10) ein Schaumstoffgeräuschdämpfer ist.

**Revendications**

1. Pneu (12) comprenant :

une bande de roulement ayant une surface de bande de roulement externe et une surface interne de revêtement interne (22) ;
au moins deux talons espacés ;
des parties de paroi latérale s'étendant entre la bande de roulement et les talons ; et
un atténuateur de bruit (10) fixé de manière adhésive qui recouvre une surface interne (22) du pneu (12) et les extrémités terminales de l'atténuateur de bruit (10) sont coupées à un angle inférieur à 90 degrés et se chevauchent ;
le pneu (12) est **caractérisé en ce que** ledit atténuateur de bruit est un atténuateur de bruit de forme trapézoïdale ayant une forme transversale de trapèze dans une direction longitudinale et ayant une surface interne plus courte (18) et une surface externe plus longue (19), et ladite surface externe plus longue (19) est recouverte avec un adhésif (20) pour qu'elle adhère au pneu.

2. Pneu selon la revendication 1, dans lequel ledit atténuateur de bruit (10) est un atténuateur de bruit en forme de courroie ayant des première et seconde extrémités terminales (14, 16), dans lequel l'atténuateur de bruit recouvre ladite surface de revêtement interne ; dans lequel l'atténuateur de bruit est fixé, de manière adhésive, sur ladite surface de revêtement interne, et dans lequel les extrémités terminales dudit atténuateur de bruit sont coupées à un angle inférieur à 90 degrés, se chevauchent, et la seconde extrémité terminale chevauchée de l'atténuateur de bruit est assemblée à la première extrémité terminale par l'adhésif présent au-dessous de la seconde extrémité terminale.

3. Pneu selon la revendication 2, dans lequel les extrémités terminales (14, 16) sont coupées à un angle compris entre environ 5 degrés et environ 65 degrés.

4. Pneu selon la revendication 2, dans lequel les extrémités terminales (14, 16) sont coupées à un angle compris entre environ 10 degrés et 55 degrés.

5. Pneu selon la revendication 2, dans lequel les extrémités terminales (14, 16) sont coupées à un angle d'environ 40 degrés à 50 degrés.

6. Pneu selon la revendication 2, dans lequel les extrémités terminales (14, 16) sont coupées à un angle d'environ 45 degrés.

7. Pneu selon la revendication 2, dans lequel les extrémités terminales (14, 16) sont coupées au même angle.

8. Pneu selon la revendication 2, dans lequel les extrémités terminales (14, 16) sont coupées à des angles différents.

9. Pneu selon la revendication 2, dans lequel l'atténuateur de bruit (10) est un atténuateur de bruit en mousse.

10. Procédé pour fabriquer un pneu (12) ayant un atténuateur de bruit, le procédé comprenant les étapes consistant à :

A. presser une couche de barrière sur une surface vierge exposée d'un revêtement interne de pneu cru pour faire adhérer la couche de barrière sur la surface vierge et former ainsi un revêtement interne cru protégé ;
B. appliquer un agent de démoulage à l'intérieur du pneu (12) ;
C. faire durcir le pneu (12) avec le revêtement interne protégé ;
D. retirer la couche de barrière pour révéler la surface vierge de revêtement interne de pneu ; et
E. fixer un atténuateur de bruit (10) sur la surface vierge de revêtement interne de pneu,

le procédé est **caractérisé en ce que** l'atténuateur de bruit (10) est un atténuateur de bruit de forme trapézoïdale ayant une forme transversale de trapèze dans une direction longitudinale et ayant une surface interne plus courte (18) et une surface externe plus longue (19) et dans lequel la surface externe plus longue (19) est recouverte avec un adhésif (20) et fixée à ladite surface vierge de revêtement interne, dans lequel une extrémité de l'atténuateur de bruit est coupée à un angle inférieur à 90° (par exemple 5~65° ou 10~55° ou 40~50°) et chevauche l'autre extrémité de l'atténuateur de bruit coupée à un angle inférieur à 90° (par exemple 5~65° ou 10~55° ou 40~50°).

11. Procédé pour fabriquer un pneu ayant un atténuateur de bruit (10), **caractérisé en ce qu'**il comprend les étapes consistant à :

A. prévoir un pneu comprenant deux talons non extensibles espacés ; une partie de bande de roulement en contact avec le sol ; une paire de parois latérales individuelles s'étendant radialement vers l'intérieur à partir des bords externes axiaux de ladite partie de bande de roulement pour assembler les talons respectifs, les bords externes axiaux de la partie de bande de roulement définissant une largeur de bande de roulement, une carcasse de support pour la partie de bande de roulement et les parois latérales, la surface de revêtement interne située le plus à l'intérieur (22) ;
B. installer un atténuateur de bruit (10) disposé radialement vers l'intérieur de la carcasse, dans lequel ledit atténuateur de bruit (10) est un atténuateur de bruit de forme trapézoïdale ayant une forme transversale de trapèze dans une direction longitudinale et ayant une surface interne plus courte (18) et une surface externe plus longue (19), et avec la surface interne plus courte (18) qui fait face à une cavité intérieure du pneu (12), dans lequel une extrémité de l'atténuateur de bruit est coupée à un angle inférieur à 90° (par exemple 5~65° ou 10~55° ou 40~50°) et chevauche l'autre extrémité de l'atténuateur de bruit coupée à un angle inférieur à 90° (par exemple 5~65° ou 10~55° ou 40~50°) ;

C. appliquer un adhésif (20) sur la surface externe plus longue (19) pour former une surface recouverte adhésive ;

D. fixer l'atténuateur de bruit recouvert adhésif sur la surface de revêtement interne (22) ; et

E. faire durcir l'adhésif (20).

12. Procédé selon l'une quelconque des revendications 10 à 11, dans lequel l'atténuateur de bruit (10) est un atténuateur de bruit en mousse.

**FIG.1**

FIG. 2

FIG. 2 A

**FIG. 3**

**FIG. 4**

**FIG. 5**

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 80919317
- US 7694707 B, Agostini and Leyssens
- EP 2397314 B1
- US 6726289 B, Yukawa
- US 7556075 B, A. Tanno
- US 7669628 B, N. Yukawa
- EP 2239152 A1
- US 7332047 B
- US 7419557 B
- US 8776851 B
- US 9630457 B, Majumdar
- US 7368024 B, Majumdar
- US 20130032262 A, Bormann

**Non-patent literature cited in the description**

- *Polymers & Tyre Asia,* June 2012, 48
- **SANDSTROM ; MAJUMDAR ; SUNDKVIST ; BORMANN ; PAN.** *Method for making pneumatic tire with foam noise damper*